# FASCICULE DE BREVET EUROPEEN

(11) **EP 2 691 587 B1**
(45) Date de publication et mention de la délivrance du brevet: **16.10.2019**
(21) Numéro de dépôt: 12714820.3
(22) Date de dépôt: 21.03.2012
(51) Int. Cl.: E05B 41/00, E05B 63/14, B64D 29/06, E05B 53/00

(54) **DISPOSITIF DE VERROUILLAGE À DÉTECTION MÉCANIQUE DE FERMETURE ET OUVERTURE**
SPERRVORRICHTUNG MIT MECHANISCHER DETEKTION DER VERSCHLIESSUNG UND ÖFFNUNG
LOCKING DEVICE WITH MECHANICAL DETECTION OF CLOSURE AND OPENING

(30) Priorité: 29.03.2011 FR 1152562
(43) Date de publication de la demande: 05.02.2014
(73) Titulaire: Safran Nacelles, 76700 Gonfreville-l'Orcher (FR)
(72) Inventeur: PROVOST, Fabrice, F-76133 Notre-Dame-du-Bec (FR); SOULIER, Pascal, F-76600 Le Havre (FR)
(74) Mandataire: Delorme, Nicolas
(86) Numéro de dépôt international: PCT/FR2012/050586
(87) Numéro de publication internationale: WO 2012/131230

(56) Documents cités:
- WO-A2-2006/033929
- FR-A1- 2 920 170
- US-A- 5 518 206
- US-A1- 2004 104 583
- US-A1- 2010 006 701

## Description

La présente invention se rapporte à un système de verrouillage d'un capot de nacelle de turboréacteur comprenant un système mécanique associé de détection de la fermeture ou ouverture dudit système de verrouillage et équipant notamment un capot ou trappe de nacelle de turboréacteur.

Elle trouve un application particulière mais non limitative dans le verrouillage d'un capot de soufflante et d'inversion de poussée de la nacelle.

Une nacelle d'avion est destinée à entourer un turboréacteur et à produire la poussée du turboréacteur en canalisant les flux engendrés par le moteur. Elle doit aussi pouvoir être ouverte afin d'accéder au moteur et à ses équipements.

La plupart des nacelles de turboréacteur comprennent un capot de soufflante entourant le carter de soufflante du moteur et un corps arrière (souvent un inverseur de poussée) entourant la partie centrale du moteur.

Pour assurer l'accès au moteur et à ses équipements, ces deux composants de nacelle s'ouvrent en général en deux demi-parties.

L'ouverture de ces capots est permise grâce à la présence de charnières, généralement montées en partie supérieure de la nacelle, en position dite douze heures, le long d'une ligne de mât, et sont maintenues fermées grâce à une pluralité de verrous montés généralement selon une ligne de verrouillage en partie inférieure, dite six heures.

Il est bien évidemment essentiel qu'après une opération de maintenance, l'intégralité des verrous soit refermée.

A cette fin, il convient de pouvoir s'assurer de manière efficace, sûre et rapide, du bon verrouillage de tous les capots ouvrables d'une nacelle avant toute mise en service de la nacelle.

Aujourd'hui, dans la plupart des cas, cette vérification repose quasi-entièrement sur la vigilance de l'opérateur qui effectue l'opération de verrouillage.

De ce fait, certaines erreurs de maintenance ont causé un nombre significatif de mauvaises fermetures de capots de soufflante, induisant parfois des événements majeurs en vol (ouverture et/ou perte d'un capot de soufflante).

Une des causes les plus fréquentes d'ouverture en vol est la fermeture ou l'ouverture partielle des verrous de capot.

Dans ce cas de figure, il est souvent difficile lors d'une vérification de routine de s'apercevoir qu'un ou plusieurs verrous sont mal fermés, car le verrouillage d'un seul verrou « met en place » le capot qui semble alors de loin correctement fermé.

Un indicateur clair d'état du verrouillage des capots de nacelle est donc nécessaire pour améliorer de manière significative la sécurité des vols.

Cet indicateur est primordial pour alerter les opérateurs en maintenance ou tout autre personnel du fait que le verrouillage des capots n'est pas réalisé correctement.

On évite ainsi une destruction totale ou partielle des capots en vol.

Par ailleurs, pour fournir un système de détection efficace du verrouillage des capots de nacelle, il doit être impossible d'amorcer un déverrouillage ou de pouvoir déverrouiller partiellement le capot sans que l'indicateur d'état du verrouillage correspondant n'affiche un statut déverrouillé.

Il existe donc également un besoin pour un système de détection de verrouillage des capots de nacelle répondant aux exigences ci-dessus mentionnées.

On connaît, notamment, des systèmes électriques de détection de verrouillage des capots de nacelle permettant d'assurer un contrôle visuel de situation.

Un tel système électrique nécessite toutefois une source d'alimentation électrique et est sujet à d'éventuelles défaillances électriques.

Si on envisage un système de détection mécanique, une des difficultés est, dans ce cas, de s'assurer que l'indicateur d'état du verrouillage des capots de nacelles affiche un statut de déverrouillage dès le premier verrou ouvert, et réciproquement que cet indicateur ne puisse passer en statut de verrouillage que lorsque strictement tous les verrous sont verrouillés.

Par ailleurs, les systèmes de détection mécaniques existant se bornent à contrôler la position de la poignée du verrou, alors que la fonction mécanique recherchée est la mise sous contrainte des verrous.

Ainsi, on connait un système de détection mécanique qui prévoit de peindre d'une couleur vive une poignée de verrou montée sur la ligne aérodynamique de la nacelle. Plus précisément, le flanc de la poignée du verrou est peint de couleur vive et le centre de gravité du verrou le fait pivoter de sorte qu'il dépasse des lignes aérodynamiques de la nacelle.

Une inspection visuelle permet de détecter cette couleur orange qui dépasse de la nacelle.

On connait, également, un système de détection mécanique qui prévoit de recouvrir les verrous dont la poignée est montée à l'intérieur des lignes aérodynamiques de la nacelle, d'une trappe qui assure la continuité des lignes de la nacelle.

Cette trappe ne peut être fermée lorsque le verrou n'est pas correctement verrouillé, car on créé une interférence entre cette trappe et la poignée du verrou.

A l'heure actuelle, on conçoit des nacelles dont la garde au sol est très faible, ce qui entraine obligatoirement un report des indicateurs de verrouillages des capots de nacelle sur les parois latérales de la nacelle et au dessus de cette dernière.

Les systèmes précités ne peuvent pas répondre à cet impératif, les rendant caduques.

Dans ce cadre, on connaît également, un système de détection mécanique de verrouillage d'un capot de nacelle pouvant répondre aux nouvelles contraintes imposées par les nacelles actuelles.

Un tel système est protégé par la demande de brevet français n°10/58591, non encore publiée, dans laquelle on propose un dispositif de verrouillage entre une première structure et une deuxième structure d'un capot, comprenant au moins une paire de verrouillage comportant au moins un pêne rattaché à la première structure et apte à venir s'engager avec au moins un moyen de retenue correspondant, rattaché à la deuxième structure, le pêne étant monté mobile à l'encontre d'au moins un moyen de renvoi élastique tendant à le ramener dans une position d'écartement du moyen de retenue.

Ce dispositif de verrouillage comprend une tringlerie de détection, montée mobile entre une première position dans laquelle elle permet le déverrouillage du pêne et du moyen de retenue, au moins une partie du pêne venant alors en prise avec la tringlerie, de manière à en bloquer un retour éventuel de cette dernière vers une deuxième position, et ladite deuxième position dans laquelle la tringlerie vient en prise avec au moins une partie de la paire de verrouillage de manière à en bloquer le déverrouillage.

Or, ce système de détection présente des inconvénients.

D'une part, il est extrêmement complexe, multipliant les pièces mécaniques devant interagir entre elles pour permettre une détection efficace.

De plus, la position du pêne de la paire de verrouillage est réglable, ceci afin de palier au calage entre les différentes structures d'un capot, ce qui engendre une position de l'extrémité du pêne relativement à la tringlerie très variable d'un inverseur à un autre.

Il est ainsi difficile d'assurer que dans tous les cas de figure, que ce soit, en tolérances extrêmes ou lors des déformations des pièces, qu'un verrouillage incorrect du capot sera détecté à coup sûr.

Par ailleurs, dans ce système de détection, la tringlerie de détection est assujettie à un indicateur visuel de type trappe.

Ce montage impose que cet indicateur soit placé sur le demi capot portant le pêne du verrou alors que pour ouvrir/fermer un verrou, on se place sur le demi capot opposé portant la poignée du verrou.

Ainsi, cet indicateur visuel n'est en fait pas ou peu visible pour l'opérateur décidé à ouvrir un verrou pour réaliser la maintenance de la nacelle.

Ceci engendre le risque que cet opérateur endommage la poignée du verrou avant de se rendre compte que l'indicateur visuel n'a pas été ouvert.

Ainsi, cet opérateur doit nécessairement ouvrir l'indicateur visuel avant tout ouverture de verrou.

Or, dans la mesure où cet indicateur est déporté par rapport à la poignée du verrou, l'opérateur doit se déplacer de part et d'autre de la nacelle pour ouvrir les verrous, ce qui rend ce système de détection laborieux et peu pratique.

On connaît, par ailleurs, des systèmes de détection mécanique connus des documents US 2010/006701 A1 et US 2004/104583 A1.

Un but de la présente invention est de proposer un dispositif de verrouillage entre une première structure et une seconde structure qui remédie aux inconvénients susmentionnés.

Il est ainsi désirable de proposer un dispositif de verrouillage entre une première structure et une seconde structure simple et pratique à mettre en oeuvre pour un opérateur tout en assurant une efficacité maximale dans la détection d'un déverrouillage d'un capot de nacelle.

Un autre but de la présente invention est de proposer un dispositif de verrouillage entre une première structure et une seconde structure limitant les actions et déplacements à réaliser par l'opérateur pour détecter un déverrouillage d'un capot de nacelle, notamment par rapport au standard nacelle pour ouvrir les verrous.

Un autre but de la présente invention est de proposer un dispositif de verrouillage entre une première structure et une seconde structure qui assure de détecter systématiquement un verrouillage incorrect du capot.

A cet effet, la présente invention vise un dispositif de verrouillage selon la revendication 1.

Selon des modes particuliers de réalisation de l'invention, le dispositif peut comprendre une ou plusieurs des caractéristiques suivantes:
- les moyens de commande de changement d'état dudit témoin comprennent, en outre, des moyens d'ouverture automatique dudit témoin.
- lesdits moyens d'ouverture automatique dudit témoin peuvent comprendre une bielle d'actionnement montée à l'une de ses extrémités sur ledit témoin et reliée à l'extrémité opposée à un moyen élastique monté sur la seconde structure.
- lesdits moyens d'ouverture automatique dudit témoin peuvent comprendre un piston associé à un moyen élastique.
- les moyens de commande sont aptes à contrôler des moyens de verrouillage dudit témoin adaptés pour :
   venir en prise avec ledit témoin ou les moyens d'ouverture automatique dudit témoin lorsque le moyen d'engagement avec le pêne est dans la première position et,
   libérer ledit témoin lorsque le moyen d'engagement avec le pêne est dans la seconde position.
- les moyens de verrouillage dudit témoin peuvent comprendre une tige de blocage du témoin montée mobile en translation sur la seconde structure, ladite tige étant adaptée pour venir en prise soit avec un épaulement porté par ledit témoin soit avec une gorge portée par les moyens d'ouverture automatique dudit témoin.
- le dispositif comprenant plusieurs moyens de verrouillage desdites structures entre elles, disposés notamment le long d'une ligne de verrouillage, le système de liaison comprend des moyens de commande de changement d'état dudit témoin commun à chacun desdits moyens de verrouillage desdites structures entre elles, reliés à chacun d'eux par au moins un moyen de transmission mécanique.
- les moyens de commande de changement d'état dudit témoin commun à chacun desdits moyens de verrouillage desdites structures entre elles comprennent un boitier de commande relié à une extrémité à chacun desdits moyens de transmission mécanique et, à une extrémité opposée, aux moyens de verrouillage dudit témoin, ledit boîtier étant monté coulissant sur la seconde structure.

La présente invention se rapporte également à une nacelle de turboréacteur comprenant au moins un capot mobile, caractérisée en ce qu'elle comprend au moins un dispositif de verrouillage associé selon l'une quelconque des revendications.

Plus particulièrement, il pourra s'agir d'un capot mobile d'une section médiane entourant une soufflante du turboréacteur et /ou d'un capot d'inversion de poussée.

La présente invention sera mieux comprise à la lumière de la description détaillée qui suit en regard du dessin annexé dans lequel :
- les figures 1a et 1b sont des représentations schématiques d'un capot ouvrant de nacelle équipé d'un dispositif de verrouillage selon un premier mode de réalisation de la présente invention, ce dispositif comprenant un témoin de verrouillage du capot respectivement en position fermée et ouverte,
- les figures 2a et2b sont des représentations schématiques en coupe longitudinale vue de côté d'un moyen verrouillage du dispositif de la figure 1, ce moyen de verrouillage étant respectivement verrouillé et déverrouillé,
- les figures 3a et 3b sont des représentations schématiques en coupe d'un premier mode de réalisation de moyens d'ouverture automatique/fermeture du témoin de la figure 1a notamment, ce témoin étant respectivement fermé et ouvert,
- la figure 4 est une représentation schématique en coupe d'un second mode de réalisation de moyens d'ouverture automatique/fermeture du témoin de la figure 1a,
- les figures 5a et 5b sont des représentations schématiques en coupe d'un mode de réalisation de moyens de commande de changement d'état du témoin de la figure 1a, ce témoin étant respectivement fermé et ouvert,
- la figure 6 est une représentation schématique d'un capot ouvrant de nacelle équipé d'un dispositif de verrouillage selon un second mode de réalisation de la présente invention, ce dispositif comprenant un témoin de verrouillage du capot en position ouverte.

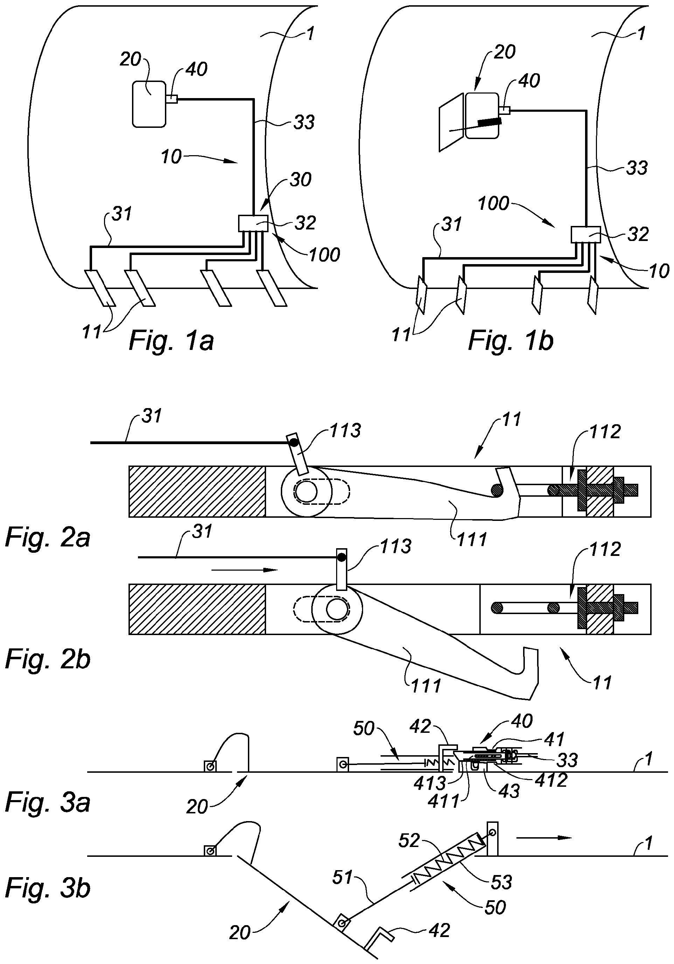

Les figures 1a et 1b illustrent un capot 1 ouvrant d'une nacelle de turboréacteur (non représentée).

Plus particulièrement, il pourra s'agir d'un capot de soufflante ou d'un capot d'inversion de poussée.

Le capot 1 est monté pivotant autour d'une ligne charnière supérieure (non représentée) et est apte à être verrouillé en partie inférieure au niveau d'une ligne de verrouillage le long de laquelle est installé un dispositif de verrouillage 10 selon l'invention.

Ce dispositif de verrouillage 10 comprend au moins un moyen de verrouillage 11 adapté pour verrouiller deux parties du capot 1.

Sur les figures, le dispositif de verrouillage 10 comprend plusieurs moyens de verrouillage 11 montés sur une ligne de verrouillage.

Un verrou 11 est représenté en détail sur les figures 2a et 2b.

Il comprend classiquement un pêne 112 se présentant sous la forme d'un étrier 112 et apte à venir s'engager avec au moins un moyen d'engagement se présentant sous la forme d'un crochet 111.

L'étrier 112 est fixe par rapport à la structure du verrou sur laquelle il est monté.

L'étrier 112 est rattaché à une partie du capot 1 tandis que le crochet 111 est relié à une seconde partie du capot, les premières et secondes parties du capot 1 étant destinées à être verrouillées.

Par ailleurs, en référence aux figures 1a et 1b, le dispositif 10 comprend, en outre, un témoin 20 de verrouillage/déverrouillage du ou des verrous des différentes parties du capot 1 entre elles.

Ce témoin, est dans un exemple non limitatif de la présente invention une trappe 20.

Cette trappe 20 est montée sur la même partie du capot 1 que le crochet 11.

Elle présente au moins un état verrouillé et un état déverrouillé.

Comme illustré sur la figure 1a, dans un mode de réalisation, l'état verrouillé de la trappe 20 peut se traduire par la fermeture de la trappe 20 tandis que l'état déverrouillé de la trappe 20 se traduit, quant à lui, par l'ouverture de la trappe 20, comme illustré sur la figure 1b.

Avantageusement, pour chaque verrou 11, le crochet 111 du verrou 11 est monté mobile entre une première position dans laquelle il est engagé avec l'étrier 112 (illustré sur la figure 2a) et il autorise le verrouillage de la trappe 20 et une seconde position dans laquelle il est libéré de l'étrier 112 (illustré sur la figure 2b) et il autorise le déverrouillage de la trappe 20.

A cet effet, le dispositif 10 comprend, en outre, un système de liaison 100 adapté qui relie le crochet 111 de chaque verrou correspondant à la trappe 20.

Un tel système de liaison 100 comprend des moyens de commande 30 de changement d'état de la trappe 20 contrôlés par la position adoptée par le crochet 11 de chaque verrou 11.

Ces moyens de commande 30 sont aptes à contrôler des moyens de verrouillage de la trappe 20.

Plus précisément, ils comprennent pour chacun des verrous 11, un élément de transmission mécanique 31 relié à un crochet 111, comme illustré sur la figure 2a notamment.

Dans un exemple non limitatif, un tel élément 31 peut être un câble.

Toutefois, d'autres variantes de réalisation sont possibles comme, par exemple, une chaîne.

Sur cette figure 2a, un doigt 113 monté en saillie du corps du crochet 111 est prévu pour recevoir une extrémité du câble 31.

Il est à noter que ce doigt peut être monté ailleurs sur le verrou 11 et, notamment, sur la poignée reliée au crochet 111.

Le montage de ce doigt 113 a pour incidence de modifier le type de verrou du capot 1 concerné par le dispositif de verrouillage selon l'invention.

Ainsi, lorsque que l'on fixe l'extrémité du câble 31 sur le crochet 111 c'est-à-dire sur le corps du verrou 11, le système de verrouillage sera celui concernant des verrous dits primaires.

Par contre, lorsque que l'on fixe l'extrémité du câble 31 sur la poignée (non illustrée) liée au crochet 111 d'un verrou, le système de verrouillage sera celui concernant des verrous dits secondaires.

Par ailleurs, comme illustré sur la figure 1a notamment, les moyens de commande 30 comprennent, en outre, un boitier de commande 32 relié à chacun des cables 31 liés aux crochets 111 des verrous.

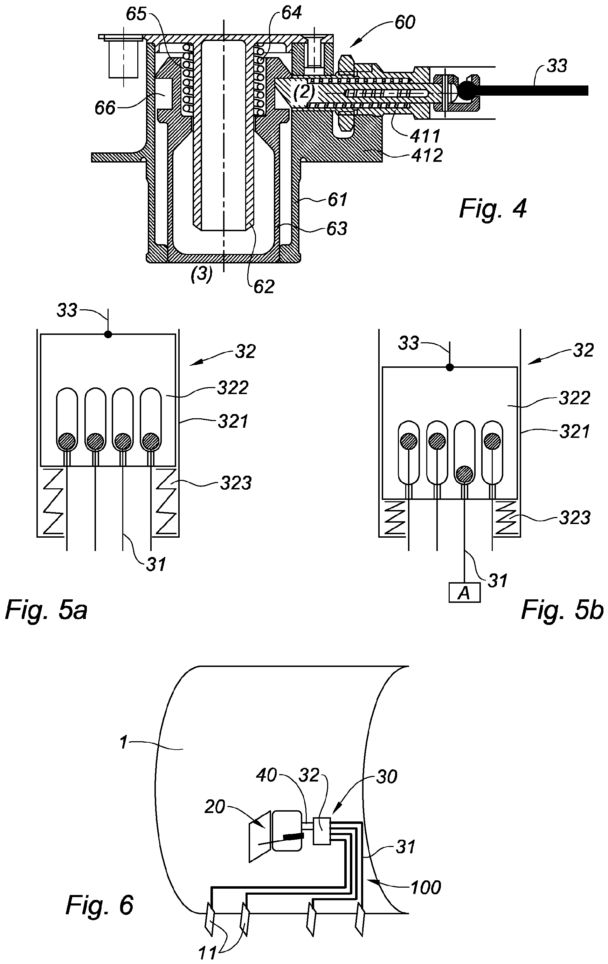

Un mode de réalisation particulier de boitier de commande 32 sera décrit plus loin en relation avec les figures 5a et 5b.

Dans un mode de réalisation, un tel boitier de commande 32 peut également être relié, via un élement de transmission mécanique 33 unique, à des moyens de verrouillage 40 de la trappe 20.

Un tel élement de transmission mécanique 33 peut être, comme précédement un câble ou tout autre élément adapté.

Dans une variante de réalisation illustrée sur la figure 6, le boitier de commande 32 peut également être relié directement aux moyens de verrouillage 40 de la trappe 20. L'élément de transmission mécanique unique 33 est supprimé.

En référence aux figures 3a et 3b, concernant les moyens de verrouillage 40 de la trappe 20, ces derniers sont adaptés pour :
- venir en prise avec la trappe 20 lorsque le crochet 111 est dans la première position engagé avec l'étrier 112, ce qui entrainera la fermeture de la trappe 20 comme illustré sur la figure 1a et,
- libérer la trappe 20 lorsque le crochet 111 n'est plus engagé avec l'étrier 112, ce qui entrainera l'ouverture de la trappe 20 comme illustré sur la figure 1b.

Plus précisément, dans cette variante de réalisation, les moyens de verrouillage 40 sont de type à loquet 41.

Ils comprennent une tige 411 mobile en translation dans un coulisseau 412 à l'encontre d'un moyen de rappel élastique 413, l'ensemble étant monté, via un logement adapté 43 sur la partie de capot 1 comprenant la trappe 20.

La tige est mobile entre :
- une position déployée dans laquelle elle coopère avec un épaulement 421 ménagé sur la trappe 20, ceci afin d'interdire toute ouverture de la trappe 20, le moyen de rappel élastique 413 étant détendu (illustré sur al figure 3a) et,
- une position rétractée dans laquelle elle libère l'épaulement 421, comprimant le moyen de rappel élastique 413.

La tige 411 étant reliée à une extrémité au câble 33 la reliant indirectement au boitier de commande 32, le coulissement de la tige 411 et sa position déployée ou rétractée est ainsi fonction de la position des crochets 111 des verrous 11.

Dans un exemple non limitatif illustré sur les figures 3a et 3b, un profilé 42 coudé est ménagé sur la face interne de la trappe 20 en saillie de cette dernière.

L'une des branches du profilé 42 formant épaulement 421 s'étend de telle sorte que la tige 411 puisse former butée à cette branche lorsque la trappe 20 peut être animée d'un mouvement de rotation vers l'extérieur en vue de son ouverture.

Ainsi, comme illustré sur la figure 3a, lorsque le crochet 111 est dans la première position engagé avec l'étrier 112, la tige 411 coulisse, se place en position déployée de sorte de former butée à l'épaulement 421, ce qui entraîne la fermeture de la trappe 20.

Comme illustré sur la figure 3b, lorsque le crochet 111 n'est plus engagé avec l'étrier 112, la tige 411 est entrainée par les moyens de commande 30 dans un mouvement de translation vers sa position rétractée, comme indiqué par la flèche. Elle coulisse dans le coulisseau 412, libérant l'épaulement 421 et par conséquent la trappe 20, permettant à cette dernière de pivoter et de s'ouvrir.

En référence aux figures 5a et 5b, on observe un mode de réalisation du boîtier de commande 32.

Un tel boitier de commande 32 est monté sur la partie du capot 1 comprenant les crochets 111 des verrous 11.

Comme précédemment indiqué, il est relié aux câbles 31 solidaires des crochets 111 des verrous 11 et au câble 33 relié aux moyens de verrouillage de la trappe 20 et, plus particulièrement à la tige de verrouillage de la trappe 411.

Le boîtier de commande 32 comprend un manchon 321 creux ouvert à deux extrémités opposées.

Des moyens de guidage 322 de la tige 411 de verrouillage de la trappe 20 sont logés dans le manchon 321.

Ces moyens de guidage 322 sont solidaires des câbles 31 liés aux crochets 111 des verrous 11 et du câble 33 relié aux moyens de verrouillage de la trappe 20.

Ces moyens de guidage 322 peuvent être mobiles en translation sans frottement au sein du manchon 321, comme, par exemple, un piston.

Le déplacement du piston 322 est entrainé par le déplacement des câbles 31 reliés aux crochets 111 lorsque ces derniers passent d'une position verrouillée du verrou 11 à une position déverrouillée du verrou 11 ou inversement.

Le déplacement du piston 322 va entraîner le coulissement du câble 33 et, par conséquent, celui de la tige 411 entraînant, selon le sens du déplacement, le verrouillage ou le déverrouillage de la trappe 20.

Ce mécanisme est réversible.

En effet, au sein du manchon 321, des moyens de rappel élastique 323 viennent prendre appui sur la base du manchon 321 située du coté des câbles 31 liés aux verrous 11 à une extrémité et sont bloqués à leur extrémité opposée par une surface plane du piston 322.

Ces moyens de rappel élastique 323 comportent un ressort de compression propre à se comprimer lorsque le piston 322 coulisse dans le manchon 321 et le câble 33 simultanément tire sur la tige 411 pour libérer la trappe 20. Ceci est illustré sur la figure 5b dans laquelle un seul verrou désigné par A se trouve être déverrouillé.

Ces moyens de rappel élastique 323 tendent à rappeler le piston 322 dans une position dans laquelle la tige 411 verrouille et entraîne la fermeture de la trappe 20. Ceci est illustré sur la figure 5a dans laquelle tous les verrous sont verrouillés, les moyens de rappel élastique 323 se détendent déplaçant le piston 322 dans une position correspondante à celle du verrouillage de la trappe 20.

Par ailleurs, en référence aux figures 3a et 3b, les moyens de commande 30 de changement d'état de la trappe 20 comprennent, en outre, des moyens 50 d'ouverture automatique de la trappe 20.

Dans une variante de réalisation, les moyens d'ouverture automatique de la trappe 20 peuvent comprendre une bielle 51 d'actionnement montée à l'une de ses extrémités sur la trappe 20 et reliée à l'extrémité opposée à au moins un moyen de rappel élastique 52 monté dans un logement 53 adapté de la partie du capot 1 portant le crochet du verrou 1.

De tels moyens sont adaptés pour entrainer automatiquement le pivotement de la trappe 20 lorsque la tige de verrouillage 411 a libéré l'épaulement 42 de la trappe 20.

En effet, la trappe 20 n'étant plus verrouillée, le moyen de rappel élastique 52 tend à se détendre entraînant, grâce à la bielle 51, le mouvement de pivotement de la trappe 20.

Ainsi, le ou les moyens de rappel élastique 52 assurent que lorsque tous les verrous 11 sont verrouillés, le boîtier de commande 32 revient à une position dans laquelle il autorise le verrouillage automatique de la trappe 20 lorsqu'elle sera refermée manuellement.

En référence aux figures 2a, 2b, 3a, 3b, 5a, 5b, un dispositif de verrouillage 10 selon l'invention est mis en oeuvre de la façon suivante.

Sur la figure 2a, le verrou 11 est verrouillé.

Dès qu'un verrou 11 est ouvert, quel qu'il soit, comme illustré sur la figure 2b, on entraîne une traction sur le câble 31 correspondant comme l'indique la flèche.

En référence à la figure 5b, ce déplacement du câble 31 entraine le coulissement du piston 322 dans le manchon 321 et la compression du ressort 323.

Le déplacement du piston 321 entraine celui du câble 33, reliant le boitier 32 à la tige de verrouillage 411 de la trappe 20, qui lui est solidaire.

En référence aux figures 3a et 3b, la traction sur le câble 33 autorise et entraine le coulissement de la tige 411 de sorte de déverrouiller la trappe 20.

La trappe 20 étant déverrouillée, elle peut pivoter et s'ouvrir sous l'action de la bielle 51 et du ressort 52.

L'opérateur va ainsi visuellement constater l'ouverture de la trappe 20 sans difficulté, puisqu'elle est située sur la même structure que le crochet 111 du verrou 11.

Tant qu'un verrou 11 est ouvert, on tire sur les câbles de transmission 31,33 et la trappe 20 ne peut pas être maintenue fermée.

Dans une variante de réalisation du boitier de commande 32 illustré sur la figure 6, comme indiqué précédemment, ce dernier coopère directement avec les moyens de verrouillage 40 de la trappe 20.

En installant le boîtier de commande 32 à proximité de la trappe 20, les moyens de verrouillage 40 peuvent être directement intégrés au boîtier 32

On supprime ainsi le nombre de pièces à gérer, en supprimant notamment le câble unique 33, le ressort à l'interface entre la tige 411 et le coulisseau 412 et le support 413.

Cette variante peut être intéressante pour un capot de petite taille ou bien si la trappe 20 peut être positionnée plus proche des verrous 11.

Dans une variante de réalisation illustrée sur la figure 4, on observe une variante des moyens d'ouverture 60 automatique/fermeture de la trappe 20.

Dans cette variante, les moyens de verrouillage 40 sont adaptés pour :
- venir en prise avec les moyens d'ouverture 60 automatique/fermeture de la trappe 20 lorsque le crochet 111 est dans la première position engagé avec l'étrier 112, ce qui entrainera la fermeture de la trappe 20 comme illustré sur la figure 1a et,
- libérer la trappe 20 lorsque le crochet 111 n'est plus engagé avec l'étrier 112, ce qui entrainera l'ouverture de la trappe 20 comme illustré sur la figure 1b.

Comme illustrée sur la figure 4, les moyens d'ouverture automatique /fermeture 60 de la trappe 20 comprennent un logement 61 creux ouvert à une extrémité libre.

Un arbre 62 est monté au centre de ce logement 61.

On prévoit, par ailleurs, un piston 63 monté sur l'arbre de façon coaxiale.

Ce piston comprend à une extrémité opposée à l'extrémité libre du logement 61, une gorge 65 annulaire dans laquelle vient se loger un moyen de rappel élastique 64 de type ressort.

Ce ressort 64 vient prendre appui sur la base du logement 61 à une extrémité et est bloqué à son extrémité opposée par le fond de la gorge 65 du piston 63.

Le ressort de compression 64 est propre à se comprimer lorsque le piston 63 coulisse dans le logement 61 pour venir en prise avec la tige de verrrouillage 411, comme illustré sur la figure 4.

Pour cela, le piston 63 comprend sur sa périphérie une gorge de retenue 66 configurée de sorte que la tige 411 vienne se loger dans la concavité de cette gorge de retenue 66 et former butée à une paroi latérale de la gorge de retenue 66.

Ainsi, lorsque l'on exerce une traction sur le câble 33, la tige 411 coulisse vers sa position rétractée, libère le piston 63 qui sous l'effet de la détente du ressort 65, coulisse dans le logement 61 et vient à son extrémité libre pousser la trappe 20 de sorte qu'elle s'ouvre automatiquement.

Ce mécanisme est évidemment réversible.

Grâce à un dispositif de verrouillage 10 selon la présente invention, le témoin 20 de verrrouillage /déverrouillage des verrous 11 du capot 1 indiquera toujours correctement le statut des verrous 11 et empêchera tout changement de statut qui ne serait pas répercuté au témoin 20.

En effet, le témoin 20 ne peut être placé dans un état verrouillé c'est-à-dire fermé et indiquant que le capot est bien verrouillé et complètement verrouillé que si tous les verrous 11 ont été reverrouillés.

En effet, compte tenu du système de liaison et des moyens de commande 30, un seul verrou non reverrouillé bloque le verrouillage du témoin 20 et ne lui permet pas de se retrouver en position fermée.

Par ailleurs, l'ouverture du témoin 20 de verrrouillage /déverrouillage des verrous 11 du capot 1 est automatique dès lors qu'on ouvre au moins un verrou 11, ce qui implique que la séquence d'ouverture des capots est identique au standard nacelle dasn lequel il n'y a pas besoin d'ouvrir le témoin 20 avant d'ouvrir les verrous 11.

Le dispositif de verrouillage 10 selon la présente invention propose un système de détection de verrouillage sur, simple et efficace.

Dans ce dispositif, la chaine de cotes est très directe, ce qui renforce l'efficacité du dispositif.

Avantageusement, avec un tel dispositif, dans la mesure où la trappe 20 , le crochet 11 du verrou et le système de liaison 100 entre les deux sont montés sur la même partie du capot 1 à verrouiller, l'opérateur repère la trappe avant même d'acceder aux verrrous 11.

Les déplacements entres les deux parties du capot 11 à verrouiller entre elles sont supprimés, ce qui facilite les opérations de maintenance et diminue les risques de détérioration des verrous 11.

Par ailleurs, le dispositif 10 de l'invention est mécanique et est donc fiable et non sujet à panne électrique.

Bien que l'invention ait été décrite avec un exemple particulier de réalisation, il est bien évident qu'elle n'y est nullement limitée et qu'elle comprend tous les équivalents techniques des moyens décrits, ainsi que leurs combinaisons sans sortir du cadre de l'invention définie par les revendications annexées.

Notamment, le témoin n'est pas limité à l'utilisation d'une trappe 20 et peut être tout indicateur visuel pouvant présenter deux états distincts.

## Revendications

1. Dispositif de verrouillage (10) entre une première structure et une seconde structure, comprenant au moins un moyen de verrouillage (11) adapté pour verrouiller lesdits premières et seconde structures l'une à l'autre, ledit moyen de verrouillage comportant au moins un pêne (112) rattaché à la première structure et apte à venir s'engager avec au moins un moyen d'engagement (111) avec le pêne correspondant, rattaché à la deuxième structure,
ledit dispositif de verrouillage (10) comprenant, en outre :
- un témoin (20) de verrouillage/déverrouillage du moyen de verrouillage (11) des structures entre elles, monté sur la même structure que le moyen d'engagement (111) avec le pêne, ledit témoin (20) présentant au moins un état verrouillé et un état déverrouillé,
- un système de liaison (100) reliant le moyen d'engagement (111) avec le pêne audit témoin (20)
le moyen d'engagement (111) avec le pêne étant monté mobile entre une première position dans laquelle il est engagé avec le pêne (112) et il autorise le verrouillage dudit témoin (20) et une seconde position dans laquelle il est libéré du pêne (112) et il autorise le déverrouillage dudit témoin (20),
**caractérisé en ce que** le système de liaison (100) comprend des moyens de commande (30) de changement d'état dudit témoin (20), ces moyens de commande (30) étant contrôlés par la position adoptée par le moyen d'engagement (111) avec le pêne.

2. Dispositif (10) selon la revendication 1, **caractérisé en ce que** les moyens de commande (30) de changement d'état dudit témoin comprennent, en outre, des moyens (50,60) d'ouverture automatique dudit témoin.

3. Dispositif (10) selon la revendication 2, **caractérisé en ce que** lesdits moyens (50,60) d'ouverture automatique dudit témoin peuvent comprendre une bielle (51) d'actionnement montée à l'une de ses extrémités sur ledit témoin (20) et reliée à l'extrémité opposée à un moyen de rappel élastique (52) monté sur la seconde structure.

4. Dispositif (10) selon la revendication 2, **caractérisé en ce que** lesdits moyens (50,60) d'ouverture automatique dudit témoin peuvent comprendre un piston associé à un moyen élastique.

5. Dispositif (10) selon la revendication 2, **caractérisé en ce que** les moyens de commande (30) sont aptes à contrôler des moyens de verrouillage (40) dudit témoin (20) adaptés pour :
venir en prise avec ledit témoin (20) ou les moyens (50,60) d'ouverture automatique dudit témoin lorsque le moyen d'engagement (111) avec le pêne est dans la première position et,
libérer ledit témoin (20) lorsque le moyen d'engagement (111) avec le pêne est dans la seconde position.

6. Dispositif (10) selon la revendication 5, **caractérisé en ce que** les moyens de verrouillage dudit témoin peuvent comprendre une tige (411) de blocage dudit témoin (20) montée mobile en translation sur la seconde structure, ladite tige (411) étant adaptée pour venir en prise soit avec un épaulement (42) porté par ledit témoin (20 soit avec une gorge (65) portée par les moyens d'ouverture et/ou de fermeture automatique dudit témoin.

7. Dispositif (10) selon la revendication 1, **caractérisé en ce que** le dispositif comprenant plusieurs moyens de verrouillage (11) desdites structures entre elles, disposés notamment le long d'une ligne de verrouillage, le système de liaison (100) comprend des moyens de commande (30) de changement d'état dudit témoin (20) commun à chacun desdits moyens de verrouillage (11) desdites structures entre elles, reliés à chacun d'eux par au moins un moyen de transmission mécanique (31).

8. Dispositif (10) selon la revendication 7, **caractérisé en ce que** les moyens de commande de changement d'état dudit témoin commun à chacun desdits moyens de verrouillage (11) desdites structures entre elles comprennent un boitier de commande (32) relié à une extrémité à chacun desdits moyens de transmission (31) mécanique et, à une extrémité opposée, aux moyens de verrouillage (40) dudit témoin (20), ledit boîtier (32) étant monté coulissant sur la seconde structure.

9. Nacelle de turboréacteur comprenant au moins un capot mobile, **caractérisée en ce qu'**elle comprend au moins un dispositif de verrouillage associé selon l'une quelconque des revendications 1 à 8.

10. Nacelle selon la revendication 9 dans laquelle le capot est un capot mobile d'une section médiane entourant une soufflante du turboréacteur et /ou un capot d'inversion de poussée.

## Patentansprüche

1. Verriegelungsvorrichtung (10) zwischen einer ersten Struktur und einer zweiten Struktur, mindestens ein Verriegelungsmittel (11) umfassend, das ausgeführt ist, um die erste und zweite Struktur miteinander zu verriegeln, wobei das Verriegelungsmittel mindestens einen Riegel (112) beinhaltet, der an der ersten Struktur angebracht ist, und imstande ist, in mindestens ein Eingreifmittel (111) mit dem entsprechenden Riegel einzugreifen, der an der zweiten Struktur angebracht ist,
wobei die Verriegelungsvorrichtung (10) weiter Folgendes umfasst:
- einen Melder (20) für eine Verriegelung/Entriegelung des Verriegelungsmittels (11) der Strukturen untereinander, der auf derselben Struktur montiert ist, wie das Eingreifmittel (111) mit dem Riegel, wobei der Melder (20) mindestens einen verriegelten Zustand und einen entriegelten Zustand aufweist,
- ein Verbindungssystem (100), das das Eingreifmittel (111) mit dem Riegel mit dem Melder (20) verbindet,
wobei das Eingreifmittel (111) mit dem Riegel zwischen einer ersten Position, in der es in dem Riegel (112) eingeführt ist, und die Verriegelung des Melders (20) erlaubt, und einer zweiten Position beweglich montiert ist, in der es von dem Riegel (112) freigegeben ist, und die Entriegelung des Melders (20) erlaubt,
**dadurch gekennzeichnet, dass** das Verbindungssystem (100) Steuerungsmittel (30) zum Ändern des Zustandes des Melders (20) umfasst, wobei diese Steuerungsmittel (30) durch die Position kontrolliert werden, die durch das Eingreifmittel (111) mit dem Riegel eingenommen wird.

2. Vorrichtung (10) nach Anspruch 1, **dadurch gekennzeichnet, dass** die Steuerungsmittel (30) zum Ändern des Zustandes des Melders weiter Mittel (50, 60) zum automatischen Öffnen des Melders umfassen.

3. Vorrichtung (10) nach Anspruch 2, **dadurch gekennzeichnet, dass** die Mittel (50, 60) zum automatischen Öffnen des Melders eine Schaltstange (51) zum Betätigen umfassen können, die an einem ihrer Enden auf dem Melder (20) montiert ist und am entgegengesetzten Ende mit einem elastischen Rückstellmittel (52) verbunden ist, das auf der zweiten Struktur montiert ist.

4. Vorrichtung (10) nach Anspruch 2, **dadurch gekennzeichnet, dass** die Mittel (50, 60) zum automatischen Öffnen des Melders einen Kolben umfassen können, der einem elastischen Mittel zugeordnet ist.

5. Vorrichtung (10) nach Anspruch 2, **dadurch gekennzeichnet, dass** die Steuerungsmittel (30) imstande sind, Verriegelungsmittel (40) des Melders (20) zu kontrollieren, ausgeführt um:
in Eingriff mit dem Melder (20) oder den Mitteln (50, 60) zum automatischen Öffnen des Melders zu kommen, wenn das Eingreifmittel (111) mit dem Riegel in der ersten Position ist, und
den Melder (20) freizugeben, wenn das Eingreifmittel (111) mit dem Riegel in der zweiten Position ist.

6. Vorrichtung (10) nach Anspruch 5, **dadurch gekennzeichnet, dass** die Verriegelungsmittel des Melders einen Stift (411) zum Blockieren des Melders (20) umfassen können, der vorschubbeweglich auf der zweiten Struktur montiert ist, wobei der Stift (411) ausgeführt ist, um entweder mit einem Ansatz (42), der von dem Melder (20) getragen wird, oder mit einer Nut (65), die von den Mitteln zum automatischen Öffnen und/oder Schließen des Melders getragen wird, in Eingriff zu kommen.

7. Vorrichtung (10) nach Anspruch 1, **dadurch gekennzeichnet, dass**, da die Vorrichtung mehrere Verriegelungsmittel (11) der Strukturen untereinander umfasst, die insbesondere entlang einer Verriegelungslinie angeordnet sind, das Verbindungssystem (100) Steuerungsmittel (30) zum Ändern des Zustands des Melders (20) umfasst, der jedem der Verriegelungsmittel (11) der Strukturen untereinander gemein ist, die mit jedem von ihnen durch mindestens ein mechanisches Übertragungsmittel (31) verbunden sind.

8. Vorrichtung (10) nach Anspruch 7, **dadurch gekennzeichnet, dass** die Steuerungsmittel zum Ändern des Zustands des Melders, der jedem der Verriegelungsmittel (11) der Strukturen untereinander gemein ist, ein Steuerungsgehäuse (32) umfassen, das an einem Ende mit jedem der mechanischen Übertragungsmittel (31) verbunden ist, und an einem entgegengesetzten Ende mit den Verriegelungsmitteln (40) des Melders (20), wobei das Gehäuse (32) gleitend auf der zweiten Struktur montiert ist.

9. Turbotriebwerksgondel, mindestens eine bewegliche Abdeckung umfassend, **dadurch gekennzeichnet, dass** sie mindestens eine zugeordnete Verriegelungsvorrichtung nach einem der Ansprüche 1 bis 8 umfasst.

10. Gondel nach Anspruch 9, wobei die Abdeckung eine bewegliche Abdeckung eines Mittenabschnitts, der ein Gebläse des Turbotriebwerks umgibt, und/oder eine Schubumkehrabdeckung ist.

## Claims

1. A locking device (10) between a first structure and a second structure, comprising at least one locking means (11) adapted to lock said first and second structures to each other, said locking means including at least one bolt (112) attached to the first structure and adapted to be engaged with at least one means (111) for engagement with the corresponding bolt, attached to the second structure,
said locking device (10) further comprising:
- an indicator (20) of the locking/unlocking of the means (11) for locking the structures to each other, mounted on the same structure as the means (111) for engagement with the bolt, said indicator (20) having at least one locked state and one unlocked state,
- a connection system (100) connecting the means (111) for engagement with the bolt to said indicator (20),
the means (111) for engagement with the bolt being movably mounted between a first position in which it is engaged with the bolt (112) and it authorizes the locking of said indicator (20) and a second position in which it is released from the bolt (112) and it authorizes the unlocking of said indicator (20),
**characterized in that** the connection system (100) comprises means (30) for controlling the change of a state of said indicator (20), these control means (30) being monitored by the position adopted by the means (111) for engagement with the bolt.

2. The device (10) according to claim 1, **characterized in that** the control means (30) for controlling the change of a state of said indicator further comprise means (50, 60) for automatically opening said indicator.

3. The device (10) according to claim 2, **characterized in that** said means (50, 60) for automatically opening said indicator may comprise an actuation connecting rod (51) mounted at one of its ends on said indicator (20) and connected at the opposite end to an elastic return means (52) mounted on the second structure.

4. The device (10) according to claim 2, **characterized in that** said means (50, 60) for automatically opening said indicator may comprise a piston associated with an elastic means.

5. The device (10) according to claim 2, **characterized in that** the control means (30) are adapted to monitor means (40) for locking said indicator (20) adapted:
to be engaged with said indicator (20) or the means (50, 60) for automatically opening said indicator when the means (111) for engagement with the bolt is in the first position and,
to release said indicator (20) when the means (111) for engagement with the bolt is in the second position.

6. The device (10) according to claim 5, **characterized in that** the locking means of said indicator may comprise a rod (411) for blocking said indicator (20) mounted movable in translation on the second structure, said rod (411) being adapted to be engaged either with a shoulder (42) carried by said indicator (20) or with a groove (65) carried by the means for automatically opening and/or closing said indicator.

7. The device (10) according to claim 1, **characterized in that** the device comprising several means (11) for locking said structures to each other, disposed in particular along a locking line, the connection system (100) comprises means (30) for controlling the change of a state of said indicator (20) common to each of said means (11) for locking said structures to each other, connected to each of them by at least one mechanical transmission means (31).

8. The device (10) according to claim 7, **characterized in that** the means for controlling the change of a state of said indicator common to each of said means (11) for locking said structures to each other, comprise a control box (32) connected, at one end, to each of said mechanical transmission means (31) and, at an opposite end, to the means (40) for locking said indicator (20), said box (32) being slidably mounted on the second structure.

9. A turbojet engine nacelle comprising at least one movable cowl, **characterized in that** it comprises at least one associated locking device according to any one of claims 1 to 8.

10. The nacelle according to claim 9, wherein the cowl is a movable cowl having a middle section surrounding a fan of the turbojet engine and/or a thrust reverser cowl.
